(19) Europäisches Patentamt
European Patent Office
Office européen des brevets

(11) EP 1 833 913 B1

(12) EUROPÄISCHE PATENTSCHRIFT

(45) Veröffentlichungstag und Bekanntmachung des Hinweises auf die Patenterteilung:
**07.09.2011 Patentblatt 2011/36**

(21) Anmeldenummer: **05815497.2**

(22) Anmeldetag: **30.11.2005**

(51) Int Cl.:
***C08L 33/26*** (2006.01) ***C08F 220/60*** (2006.01)
***D21H 17/43*** (2006.01)

(86) Internationale Anmeldenummer:
**PCT/EP2005/012760**

(87) Internationale Veröffentlichungsnummer:
**WO 2006/072295 (13.07.2006 Gazette 2006/28)**

(54) **HOCH KATIONISCHE POLYMERDISPERSIONEN, VERFAHREN ZU DEREN HERSTELLUNG UND DEREN VERWENDUNG**

HIGHLY CATIONIC POLYMER DISPERSIONS, METHOD FOR PRODUCING THEM AND THEIR USE

DISPERSIONS POLYMERES TRES CATIONIQUES, PROCEDE POUR LEUR PRODUCTION ET LEUR UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.12.2004 DE 102004063793**

(43) Veröffentlichungstag der Anmeldung:
**19.09.2007 Patentblatt 2007/38**

(73) Patentinhaber: **Ashland Licensing and Intellectual Property LLC**
**Dublin, OH 43017 (US)**

(72) Erfinder:
- **BELLMANN, Susanne**
  **40878 Ratingen (DE)**
- **STEINER, Norbert**
  **63755 Alzenau (DE)**
- **ISSBERNER, Jörg**
  **47877 Willich (DE)**
- **BOEKELO, Christian**
  **47807 Krefeld (DE)**
- **WOEBEL, Wolfgang**
  **47877 Willich (DE)**

(74) Vertreter: **Brosch, Oliver et al**
**Kutzenberger & Wolff**
**Theodor-Heuss-Ring 23**
**50668 Köln (DE)**

(56) Entgegenhaltungen:
**EP-A- 0 637 598** **EP-A- 0 717 056**
**US-B1- 6 221 957**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 833 913 B1

Printed by Jouve, 75001 PARIS (FR)

## Beschreibung

Die vorliegende Erfindung betrifft hoch kationische Wasser-in-Wasser-Polymerdispersionen enthaltend ein feinverteiltes, wasserlösliches oder wasserquellbares Polymerisat A mit einem kationischen Monomeranteil von mindestens 55 Gew. % und eine kontinuierliche wäßrige Phase enthaltend ein kationisches polymeres Dispergiermittel B, ein Verfahren zu deren Herstellung und deren Verwendung als Flockungshilfsmittel, etwa bei der Papierherstellung oder bei der Sedimentation von Feststoffen.

Im folgenden Text steht die Abkürzung (Meth)acryl für Acryl und Methacryl, z.B. bedeutet (Meth)acrylamid Acrylamid und Methacrylamid.

Wasser-in-Wasser-Polymerdispersionen und deren Herstellung werden im Stande der Technik wiederholt beschrieben. Die Herstellung dieser Dispersionen erfolgt in der Regel so, dass ein niedermolekulares polymeres Dispergiermittel in wässriger Lösung mit kationischen Monomerkomponenten vermischt wird und diese dann polymerisiert werden. Dabei wird im Wesentlichen angestrebt, sowohl rheologische Probleme bei deren Herstellung zu vermeiden als auch besser handhabbare Wasser-in-Wasser-Dispersionen zu erhalten.

Der WO 98/14405 sind kationische Waser-in-Wasser-Dispersionen zu entnehmen, bei denen nur durch die Anwesenheit einer Mischung aus einem kosmotropen und einem chaotropen bzw. einem anionischen, organischen Salz während der Polymerisation die Viskosität der entstehenden Wasser-in-Wasser-Dispersionen gesenkt werden kann. Beispielhaft werden Dispersionen mit kationischen Monomeranteilen im hochmolekularen Polymeranteil zwischen 20 und 83 % und polymeren Dispergiermitteln mit Molekulargewichtsmitteln zwischen 180.000 und 1.500.000 verwendet. Trotz der erwähnten Salzzusätze können, unabhängig vom Gehalt an kationischen Monomeren, bei geringen Abweichungen des Salzgehaltes oder bei geringen Variationen in der kationischen Monomerkomponente unerwartet starke, nicht mehr handhabbare Viskositätserhöhungen auftreten.

In der WO 98/31748 werden kationische Wasser-in-Wasser-Dispersionen beschrieben, die 2 bis 3 Gew.% niedermolekulare polymere Amine auf Basis eines Kondensationsproduktes aus Diamin und Epichlorhydrin als polymeres Dispergiermittel enthalten. Die Dispersionen sind stabil und trotz eines relativ hohen Anteils an dispergierten Polymeren gießbar, sofern bei der Herstellung ein wasserlösliches, anorganisches Salz in Mengen von wenigstens 10 Gew.% und eine organische Säure vor der Polymerisation der dispergierten Monomerlösung zugegeben werden. Solche hohen Salzmengen sind für viele Einsatzzwecke der Wasser-in-Wasser-Dispersionen nicht akzeptabel.

Die WO 98/31749 unterscheidet sich von der WO 98/31748 durch die zusätzliche Verwendung von Polyhydroxyverbindungen während der Polymerisation, beispielsweise Polyethylenglykol. Beispielhaft werden darüber hinaus auch Poly-DADMAC und Polydicyandiamid als polymere Dispergatoren eingesetzt. Die erhaltenen Wasser-in-Wasser-Dispersionen, die ggf. auch Salze enthalten können, sind gießbar und zeigen keine irreversible Agglomeration bei Lagerung. Sie müssen aber bei weiterer Verdünnung über ein bestimmtes Maß hinaus verdünnt werden, da sonst bei der Verdünnung ein unerwünscht hoher Anstieg der Brookfield-Viskosität gegenüber der noch nicht verdünnten Wasser-in-Wasser Dispersion auftritt. Dies ist aber für die Anwendung der Wasser-in-Wasser-Dispersionen nachteilig.

Zur Reduzierung von während der Polymerisation auftretenden Viskositätsspitzen schlägt die EP-A-0 630 909 ein Polymerisationsverfahren vor, bei dem das Dispergiermittelpolymer der Wasser-in-Wasser-Dispersionen in wässriger Lösung vorgelegt wird und ein Teil des zu polymerisierenden Monomers über die Zeit dosiert wird. Trotz dieser Maßnahmen ist die Zugabe eines polyvalenten, anionischen Salzes zur Viskositätsregelung in Mengen von mindestens 15 Gew.% erforderlich. Weiteres Salz wird zusätzlich zur Verringerung der Viskosität der erhaltenen Wasser-in-Wasser-Dispersion zugegeben. Auch hier führt die hohe Salzmenge dazu, daß die Wasser-in-Wasser-Dispersionen nicht für alle Anwendungszwecke problemlos eingesetzt werden können.

US 6,221,957 offenbart kationische Wasser-in-Wasser Dispersionen enthaltend ein Dispergiermittel, ein Polymerisat und 21 bis 24 Gew.% eines Salzes.

Kationische Wasser-in-Wasser Dispersionen enthaltend ein Dispergiermittel, ein Polymerisat und etwa 15 Gew.% eines Salzes sind bekannt aus EP 0 717 056.

EP 0 637 598 offenbart ein Verfahren zur Herstellung einer kationischen Wasser-in-Wasser Polymerdispersion enthaltend ein Dispergiermittel welches ein Copolymer aus Diallyldimethylammoniumchlorid und einem Monomer vom Typ der Dialkylaminoalkyl(meth)acrylate, Dialkylaminoalkyl(meth)acrylamide und/oder Acrylsäure-Alkylester aufweist.

Aus der EP 262 945 A2 sind kationische Flockungshilfsmittel und Verfahren zu Ihrer Herstellung bekannt, die aus zwei unterschiedlichen Polymerkomponenten bestehen. Sie entstehen nicht durch Vermischung der Polymerkomponenten, sondern werden durch Polymerisation kationischer Monomere zu einer hochmolekularen kationischen Polymerkomponente (Flockulant) in Gegenwart einer niedermolekularen kationischen Polymerkomponente (Koagulant) gebildet. Der Koagulant weist ein Molekulargewichtsmittel Mw von unter 1 Mio g/mol auf. Bei dieser Polymerisationsreaktion kann es zu Pfropfreaktionen am vorgelegten Polymer kommen. Aufgrund ihrer Unverträglichkeit mit dem Flockulanten auf Basis von Acrylatmonomeren werden folgende Koagulant Polymere bevorzugt verwendet: Polymere aus Allylmonomeren, insbesondere Poly-DADMAC und Amin-Epichlorhydrin Polymere. Das Verhältnis von Koagulant zu der hochmolekularen Polyelektrolyt-Komponente wird mit 10:1 bis 1:2, bevorzugt 5:1 bis 1:1,5 angegeben, d.h. in der bevorzugten

Ausführungsform beträgt der Anteil des Koagulanten an der Polymermischung 83 bis 40 Gew.%. Die hohen Anteile an Koagulant bereiten bei der Herstellung von Polymerisationslösungen Viskositätsprobleme. Die Eigenschaften der offenbarten Flockungsmittel genügen nicht den Anforderungen wie sie an technische Flockungsprozesse in Bezug auf Schnelligkeit und Wirksamkeit gestellt werden.

Der DE 100 61 483 A1 ist ein Verfahren zur Herstellung von Wasser-in-Wasser-Dispersionen zu entnehmen, bei dem durch den Zusatz geringer Mengen Salz und Säuren eine lagerstabile Dispersionsqualität erreicht wird. Der Anmeldeschrift ist kein Hinweis auf rheologische Probleme während der Herstellung zu entnehmen.

Während der Herstellung von Wasser-in-Wasser-Dispersionen kommt es häufig zu einem starken Anstieg des Drehmomentes am Rührwerk aufgrund von Verdickungen des Polymerisationsansatzes, die von den Rührwerken der Polymerisationsreaktoren nicht mehr bewältigt werden können. Häufig wird auch ein Anstieg des Drehmomentes erst nach dem Abkühlen des Polymerisationsansatzes beobachtet. Derartige Polmerisationsansätze sind nicht mehr zu verwenden und müssen entsorgt werden. Aus dem Stand der Technik ist für dieses rheologische Problem keine Lösung für salzfreie bzw. salzarme Polymerdispersionen zu entnehmen.

Darüber hinaus können bei den aus dem Stand der Technik bekannten Wasser-in-Wasser-Dispersionen bei längerer Lagerung, insbesondere unter extremen Bedingungen wie Temperaturen über 25°C bis zu 50°C, Veränderungen, d. h. Beeinträchtigungen der vorteilhaften Eigenschaften der Wasser-in-Wasser-Dispersionen auftreten, die beispielsweise zu verlängerten Entwässerungszeiten führen.

Aufgabe der vorliegenden Erfindung war es daher, salzarme bzw. salzfreie kationische Wasser-in-Wasser-Polymerdispersionen zur Verfügung zu stellen, die sowohl nach einer Lagerung unter extremen Bedingungen, wie Temperaturen bis zu 40°C, praktisch unveränderte Gebrauchseigenschaften aufweisen. Ferner soll nach Möglichkeit die Viskosität einer 5%igen Lösung nicht unter 1000 mPas und die Produktviskosität nicht über 25 000 mPas liegen. Bevorzugt sollen niedrige Restmonomerwerte von unter 1000 ppm erreicht werden. Darüber hinaus sollen die Polymerdispersionen nach Möglichkeit ein gleichwertiges oder verbessertes Eigenschaftsprofil als Flockcungsmittel gegenüber den Produkten des Standes der Technik zeigen.

Ferner ist es eine Aufgabe der Erfindung ein Verfahren zur Herstellung der kationischen Wasser-in-Wasser-Polymerdispersionen anzugeben. Dieses Verfahren soll sicherstellen, dass es während der Polymerisationsreaktion zu keinen unbeherrschbaren rheologischen Verdickungserscheinungen kommt, die Verfahrensprodukte eine gute Fliessfähigkeit aufweisen und auch bei Lagerung keine Verdickungen ausbilden, einen niedrigen Gehalt an Restmonomer aufweisen und den neuesten technischen Anforderungen an Flockungsmittel genügen.

Die Aufgabe wird gelöst, durch die Bereitstellung von kationischen Wasser-in-Wasser Polymerdispersion enthaltend ein kationisches Polymerisat A und wenigstens ein polymeres kationisches Dispergiermittel B, dadurch gekennzeichnet, dass das Polymerisat A aus

a1) 55 bis 100 Gew.% kationischer Monomere des Typs derkationisierten Dialkylaminoalkyl(meth)acrylate und/oder Dialkylaminoalkyl(meth)acrylamide und
a2) 0 bis 45 Gew.% nichtionischer Monomere gebildet ist und ein Molekulargewicht von größer 1,5 Mio g/mol aufweist; dass das polymere kationische Dispergiermittel B aus
b1) 30 bis 100 Gew.% kationisierter Dialkylaminoalkyl(meth)acrylamide und/oder kationisierter N-Alkyl- bzw. N,N-Dialkyl(meth)crylamide und b2) 0 bis 70 Gew.% nichtionischer Monomere gebildet ist und ein Molekulargewichtsmittel Mw von über 350.000 bis 1 Mio g/mol aufweist; und dass die kationische Wasser-in-Wasser Polymerdispersion einen Wasseranteil von 40 bis 90 Gew.% aufweist und das kationische Polymerisat A in Mengen von 30 bis 70 Gew.% bezogen auf den Polymeranteil aus Polymer A und polymerem Dispergiermittel B enthält.

Es wurde gefunden, dass das Molekulargewicht des kationischen Dispergiermittels B einen wesentlichen Einfluss auf die Stabilität und die Eigenschaften der erfindungsgemäßen kationischen Wasser-in-Wasser-Polymerdispersion hat. Die in den erfinderischen Polymerdispersionen vorhandenen Dispergiermittel mit einem Molekulargewichtsmittel Mw von über 350.000 bis 1 Mio. g/mol (gemessen mittels (Gelpermeationschromatographie mit 1,5%iger Ameisensäure als Elutionsmittel gegen Pullulan-Standards) führen zu Produkten mit großer Stabilität in Bezug auf das rheologische Verhalten bei der Lagerung, auf die Viskosität der verdünnten Gebrauchslösungen und deren Lagerungseigenschaften. Vorzugsweise werden die polymeren Dispergiermittel in einem Molekulargewichtsmittelbereich von 400.000 bis 700.000 g/mol und besonders bevorzugt 450.000 bis 650.000 g/mol eingesetzt.

Als polymere Dispergiermittel B werden kationische Polymerisate eingesetzt, die aus 30 -100 Gew%, vorzugsweise 50 - 100 Gew.%, besonders bevorzugt 100 Gew.% kationischen Monomereinheiten aufgebaut sind, die sich von kationischen, ethylenisch ungesättigten Monomeren des Typs der Dialkylaminoalkyl(meth)acrylamide und/oder N-Alkyl- bzw. N,N-Dialkyl(meth)acrylamide ableiten.

Beispiele für derartige Monomere sind Dialkylaminoalkyl(meth)acrylamide mit 1 bis 6 C-Atomen, bevorzugt mit 1 bis 3 C-Atomen in den Alkyl- bzw. Alkylengruppen wie Dimethylaminoethyl(meth)acrylamid, Diethylaminoethyl(meth) acrylamid, Diethylaminopropyl(meth)acrylamid, Dimethylaminopropyl(meth)acrylamid, Diethylaminopropyl(meth)acrylamid, Dimethylaminobutyl(meth)acrylamid, Diethylaminobutyl(meth)acrylamid, und kationisierte N-Alkyl- bzw. NN-Dialkyl(meth)acrylamide mit Alkylresten von 1 bis 6 C-Atomen, wie z.B. von N-Methyl(meth)acrylamid, N,N-Dimethylacrylamid, N-Ethyl(meth)acrylamid, N-Propyl(meth)acrylamid, tert.-Butyl(meth)acrylamid.

Die basischen Monomere werden in mit Mineralsäuren oder organische Säuren neutralisierter oder quaternisierter Form eingesetzt, wobei die Quaternisierung vorzugsweise mit Dimethylsulfat, Diethylsulfat, Methylchlorid, Ethylchlorid oder Benzylchlorid vorgenommen wird. In einer bevorzugten Ausführungsform werden die mit Methylchlorid oder Benzylchlorid quaternisierten Monomere verwendet.

Bevorzugte kationische Monomerkomponenten sind die kationisierten Amide der (Meth)acrylsäure, jeweils ein quaternisiertes N-Atom enthaltend und insbesondere bevorzugt wird quaternisiertes Dimethylaminopropylacrylamid verwendet.

Optional können die polymeren Dispergiermittel B bis zu 60 Gew.%, vorzugsweise bis zu 40 Gew.% und besonders bevorzugt bis zu 25 Gew.% weitere kationische Monomere enthalten, wie beispielsweise Dialkylaminoalkyl (meth)acrylate.

Neben den zuvor genannten kationischen Monomeren können auch weitere nichtionische und amphotere Monomere am Aufbau des polymeren Dispergiermittels B beteiligt sein.

Als nichtionische Monomere können zur Herstellung des Dispergiermittelpolymers B Verbindungen der allgemeinen Formel (I)

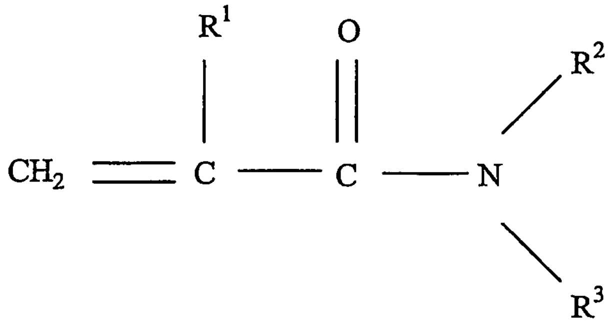

(I)

,

in der

| | |
|---|---|
| $R^1$ | für einen Wasserstoff oder einen Methylrest, und |
| $R^2$ und $R^3$ | ,unabhängig voneinander, für Wasserstoff, für Alkyl- oder Hydroxyalkylrest mit 1 bis 5 C-Atomen |

stehen,

eingesetzt werden. Vorzugsweise werden (Meth)acrylamid, N-Methyl(meth)acrylamid, N-Isopropyl(meth)acrylamid oder N,N-substituierte (Meth)acrylamide, wie N,N-Dimethyl(meth)acrylamid, N,N-Diethyl(meth)acrylamid, N-Methyl-N-ethyl (meth)acrylamid oder N-Hydroxyethyl(meth)acrylamid, ganz besonders bevorzugt Acrylamid, eingesetzt. Die nichtionischen Monomerbestandteile können im Dispergiermittelpolymer in Mengen bis zu 70 Gew.%, vorzugsweise bis zu 50 Gew.% einpolymerisiert sein.

Als amphiphile Monomerbestandteile des Dispergiermittelpolymers B können Verbindungen der allgemeinen Formel (III) oder (IV)

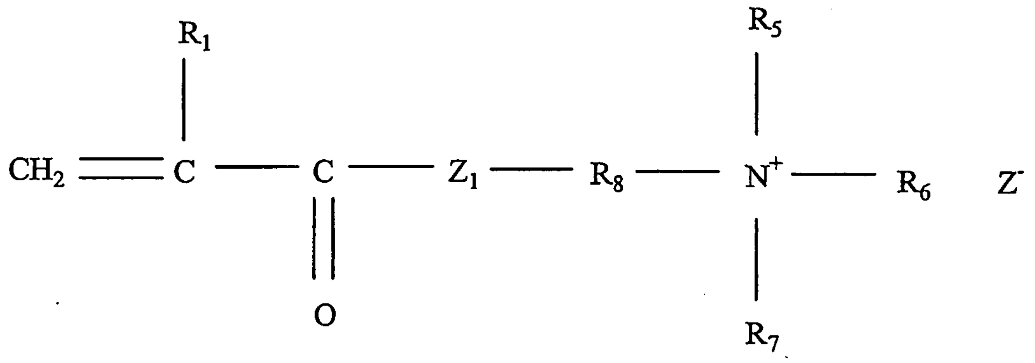

(III)

wobei

- $Z_1$ für O, NH, $NR_4$ mit $R_4$ für Alkyl mit 1 bis 4 Kohlenstoffatomen,
- $R_1$ für Wasserstoff oder einen Methylrest,
- $R_8$ für Alkylen mit 1 bis 6 Kohlenstoffatomen,
- $R_5$ und $R_6$ ,unabhängig voneinander, für einen Alkylrest mit 1 bis 6 Kohlenstoffatomen,
- $R_7$ für einen Alkyl-, Aryl- und/oder Aralkyl-Rest mit 8 bis 32 Kohlenstoffatomen und
- $Z^-$ für Halogen, Pseudohalogen, $SO_4CH_3^-$ oder Acetat

stehen oder

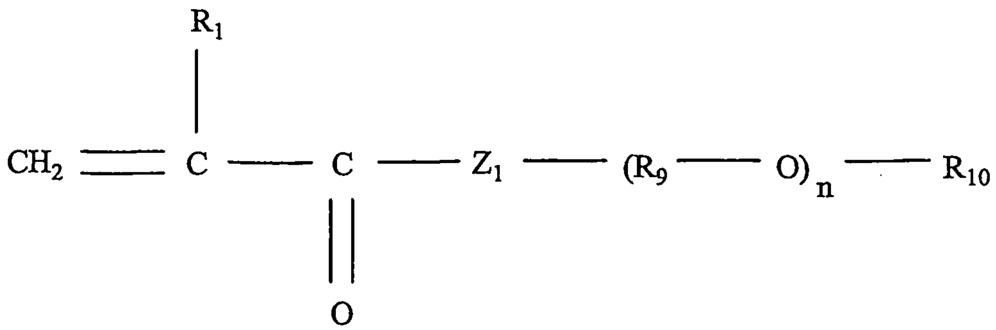

(IV)

wobei

- $Z_1$ für O, NH, $NR_4$ mit $R_4$ für Alkyl mit 1 bis 4 Kohlenstoffatomen,
- $R_1$ für Wasserstoff oder einen Methylrest,
- $R_{10}$ für Wasserstoff, einen Alkyl-, Aryl- und/oder Aralkyl-Rest mit 8 bis 32 Kohlenstoffatomen,
- $R_9$ für einen Alkylenrest mit 2 bis 6 Kohlenstoffatomen

und

- n für eine ganze Zahl von 1 und 50

stehen,
eingesetzt werden.

Vorzugsweise sind dies Umsetzungsprodukte von (Meth)acrylsäure mit Polyethylenglykolen (10 bis 40 Ethylenoxideinheiten), die mit Fettalkohol verethert sind, bzw. die entsprechenden Umsetzungsprodukte mit (Meth)acrylamid. Amphiphile Monomerbestandteile können am Aufbau des Dispergiermittelpolymers bis zu 30 Gew.%, vorzugsweise bis zu 15 Gew.% beteiligt sein. Auf jeden Fall ist aber darauf zu achten, dass ein gegebenenfalls wasserunlöslicher Anteil bei den amphiphilen ethylenisch ungesättigten Monomeren, so gewählt wird, dass die Wasserlöslichkeit bzw. die Wasserquellbarkeit des nach der Polymerisation erhaltenen Polymerisats A nicht beeinträchtigt wird.

Das polymere Dispergiermittel B und das Polymerisat A sind unterschiedlich, wobei der Unterschied durch

physikalische Größen, wie unterschiedliche Molekulargewichte und/oder chemischen Aufbau, wie unterschiedliche Monomerzusammensetzung, gegeben sein kann.

Das kationische Polymerisat A der erfindungsgemäßen kationischen Wasser-in-Wasser-Polymerdispersion ist entweder vollständig aus kationischen Monomereinheiten oder in Kombination mit nichtionischen und gegebenenfalls amphiphilen Monomeren zusammengesetzt.

Als kationische Monomere zur Herstellung der Polymerisate A eignen sich kationisierte Dialkylaminoalkyl(meth) acrylate und Dialkylaminoalkyl(meth)acrylamide mit 1 bis 6 C-Atomen im Alkyl- bzw. Alkylenrest.

Vorzugsweise sind als protonierte oder quaternierte Dialkylaminoalkyl-(meth)acrylate oder -(meth)acrylamide mit 1 bis 3 C-Atomen in den Alkyl- bzw. Alkylengruppen, besonders bevorzugt das mit Methylchlorid quaternierte Ammoniumsalz von Dimethylaminoethyl(meth)acrylat, Dimethylaminopropyl(meth)acrylat, Dimethylaminoethyl(meth)acrylat, Diethylaminoethyl(meth)acrylat, Dimethylaminomethyl(meth)acrylat Dimethylaminoethyl(meth)acrylamid und/ oder Dimethylaminopropyl-(meth)acrylamid geeignet. Bevorzugt werden Dimethylaminoethylacrylat und Dimethylaminopropylacrylamid eingesetzt, wobei Dimethylaminoethylacrylat besonders bevorzugt ist.

Die basischen Monomere werden in mit Mineralsäuren oder organischen Säuren neutralisierter oder quaternisierter Form eingesetzt, wobei die Quaternisierung vorzugsweise mit Dimethylsulfat, Diethylsulfat, Methylchlorid, Ethylchlorid oder Benzylchlorid vorgenommen wird. In einer bevorzugten Ausführungsform werden die mit Methylchlorid oder Benzylchlorid quaternisierten Monomere verwendet.

Vorzugsweise wird für das Polymerisat A eine Monomerzusammensetzung gewählt, die aus 55 bis 100 Gew. %, vorzugsweise aus 60 bis 100 Gew.% und ganz besonders bevorzugt 61 bis 95 Gew.% jeweils bezogen auf die Gesamtmenge an Monomeren, kationischer Monomeren besteht.

Als nichtionische bzw. amphiphile Monomerbausteine des kationischen Polymers A kommen dieselben Monomerverbindungen infrage, wie sie zur Zusammensetzung des polymeren Dispergiermittels B beschrieben wurden. Der Anteil nichtionischer Monomere im Polymerisat A beträgt 0 bis 45 Gew.%, vorzugsweise 0 bis 40 Gew.% und besonders bevorzugt 5 bis 39 Gew.%. Der Anteil der amphiphilen Monomere im Polymerisat A beträgt 0 bis 30 Gew. %, vorzugsweise 0 bis 15 Gew.%.

Ganz besonders bevorzugt besteht das Polymerisats A aus einer Mischung von nichtionischen Monomeren, vorzugsweise Acrylamid und kationischen Monomeren, vorzugsweise Dialkylaminoalkyl(meth)acrylate und/oder Dialkylaminoalkyl(meth)acrylamide, die quaterniert sind.

Die in der erfindungsgemäßen Wasser-in-Wasser-Polymerdispersion enthaltenden Polymerisate A sind hochmolekulare, aber dennoch wasserlösliche bzw. wasserquellbare Polymerisate mit einem Molekulargewichtsmittel Mw, gemessen nach der GPC-Methode, von Mw > 1,5 x $10^6$ g/mol.

Die erfindungsgemäßen Wasser-in-Wasser-Polymerdispersionen enthalten das hochmolekulare kationische Polymerisat A in Mengen von 30 bis 70 Gew.%, vorzugsweise von 40 bis 60 Gew.% bezogen auf den Polymeranteil aus Polymer A und polymerem Dispergiermittel B.

Die erfindungsgemäßen Wasser-in-Wasser-Polymerdispersionen enthalten einen Wasseranteil von 40 bis 90 Gew.%, vorzugsweise von 50 bis 80 Gew.%.

Für die erfindungsgemäßen Polymerdispersionen wurde festgestellt, dass mit steigendem Feststoffgehalt bzw. steigendem kationischen Monomeranteil im Polymer A der Einsatz steigender Mengen an Dispergiermittelpolymer B vorteilhaft ist.

Bei Mitverwendung weiterer wasserlöslicher Dispersionsmittelkomponenten in Verbindung mit dem polymeren Dispergiermittel B sollte ein Gewichtsverhältnis des polymeren Dispergiermittels B zu diesen Komponenten von 1:0,01 bis 0,5, vorzugsweise 1:0,01 bis 0,3 eingehalten werden. Beispielhaft sind als weitere Dispergiermittel Cellulosederivate, Polyvinylacetate, Stärke, Stärkederivate, Dextrane, Polyvinylpyrrolidone, Polyvinylpyridine, Polyethylenimine, Polyamine, Polyvinylimidazole, Polyvinylsuccinimide, Polyvinyl-2-methylsuccinimide, Polyvinyl-1,3-oxazolidon-2e, Polyvinyl-2-methylimidazoline und/oder deren jeweilige Copolymerisate mit Maleinsäure, Maleinsäureanhydrid, Fumarsäure, Itakonsäure, Itakonsäureanhydrid, (Meth)acrylsäure, Salze der (Meth)acrylsäure und/oder (Meth)acrylsäureamid-Verbindungen, zu erwähnen.

Optional können die erfindungsgemäßen Wasser-in-Wasser-Polymerdispersionen weitere übliche Bestandteile, etwa in Form von Säuren und/oder Salzen enthalten. Die Säure kann in Mengen von 0,1 - 3 Gew.%, das Salz in Mengen von 0,1 bis maximal 3 Gew.%, jeweils bezogen auf die Gesamtdispersion, und die Säure und das Salz insgesamt in Mengen von maximal 5 Gew.%, vorzugsweise 4 Gew.%, bezogen auf die Gesamtdispersion, vorhanden sein.

Es können wasserlösliche organische Säuren und/oder anorganische Säuren vorhanden sein. Als organische wasserlösliche Säuren eignen sich insbesondere organische Carbonsäuren, Sulfonsäuren, Phosphonsäuren, vorzugsweise aliphatische oder aromatische Mono-, Di-, Poly-Carbonsäuren und/oder Hydroxycarbonsäuren, vorzugsweise Essigsäure, Propionsäure, Zitronensäure, Oxalsäure, Bernsteinsäure, Malonsäure, Adipinsäure, Fumarsäure, Maleinsäure, Benzoesäure, ganz besonders bevorzugt Zitronensäure, Adipinsäure und/oder Benzoesäure. Als anorganische Säuren eignen sich wasserlösliche Mineralsäuren, vorzugsweise Salzsäure, Schwefelsäure, Salpetersäure und/oder Phosphorsäure. Ganz besonders bevorzugt wird Zitronensäure, Adipinsäure, Benzoesäure, Salzsäure, Schwefelsäure

und/oder Phosphorsäure.

Als wasserlösliches Salz können Ammonium-, Alkalimetall- und/oder Erdalkalimetallsalze, vorzugsweise Ammonium-, Natrium-, Kalium-, Kalzium- und/oder Magnesiumsalze eingesetzt werden. Solche Salze können Salze einer anorganischen Säure oder einer organischen Säure, vorzugsweise einer organischen Carbonsäure, Sulfonsäure, Phosphonsäure oder einer Mineralsäure sein. Vorzugsweise sind die wasserlöslichen Salze Salze einer aliphatischen oder aromatischen Mono-, Di-, Polycarbonsäure, einer Hydroxycarbonsäure, vorzugsweise der Essigsäure, Propionsäure, Zitronensäure, Oxalsäure, Bernsteinsäure, Malonsäure, Adipinsäure, Fumarsäure, Maleinsäure oder Benzoesäure oder Schwefelsäure, Salzsäure oder Phosphorsäure. Ganz besonders bevorzugt kommen als wasserlösliche Salze Natriumchlorid, Ammoniumsulfat und/oder Natriumsulfat zum Einsatz. Die Salze können vor, während oder nach der Polymerisation zugegeben werden, bevorzugt wird die Polymerisation in Gegenwart eines wasserlöslichen Salzes durchgeführt.

Ferner können die erfindungsgemäßen Wasser-in-Wasser-Polymerdispersionen wasserlösliche polyfunktionelle Alkohole und/oder deren Umsetzungsprodukte mit Fettaminen in Mengen bis zu 30 Gew. %, vorzugsweise bis zu 15 Gew. % und besonders bevorzugt bis zu 10 Gew. % bezogen auf das Dispergiermittel B enthalten. Dabei eignen sich insbesondere Polyalkylenglykole, vorzugsweise Polyethylenglykole, Polypropylenglykole, Blockcopolymere von Propylen/Ethylenoxid, mit Molekulargewichten von 50 bis 50 000, vorzugsweise 1 500 bis 30 000, niedermolekulare polyfunktionelle Alkohole wie Glycerin, Ethylenglykol, Propylenglykol, Pentaerythrit und/oder Sorbitol als polyfunktionelle wasserlösliche Alkohole und/oder deren Umsetzungsprodukten mit Fettaminen mit $C_6$-$C_{22}$ im Alkyl- oder Alkylenrest.

Ein weiterer Gegenstand der Erfindung ist die Angabe eines Polymerisationsverfahrens zur Herstellung der erfindungsgemäßen Wasser-in-Wasser-Polymerdispersionen.

Erfindungsgemäß ist die Herstellung von Wasser-in-Wasser-Polymerdispersionen aus einem kationischen Polymerisat A und wenigstens einem polymeren kationischen Dispergiermittel B dadurch gekennzeichnet, dass
in einem Polymerisationsreaktor

- eine wässrige Lösung eines polymeren kationischen Dispergiermittels B mit einem Molekulargewichtsmittel Mw von über 350.000 bis 1 Mio g/mol und aufgebaut aus b1) 30 bis 100 Gew.% kationisierten Dialkylaminoalkyl(meth) acrylamiden und/oder kationisierten N-Alkyl- bzw. N,N-Dialkyl(meth)acrylamiden und b2) 0 bis 70 Gew.% nichtionischen Monomeren mit
- einer Monomermischung aus
  a1) 55 bis 100 Gew.% kationisierter Mono- und/oder
  Dialkylaminoalkyl(meth)acrylate und/oder Dialkylaminoalkyl(meth)acrylamide und
  a2) 0 bis 45 Gew.% nichtionischer Monomere vereinigt wird und
- unter Zugabe von radikalischen Initiatoren eine radikalische Polymerisation der Monomerenmischung durchgeführt wird, und **dadurch gekennzeichnet, dass** die kationische Wasser-in-Wasser Polymerdispersionen einen Wasseranteil von 40 bis 90 Gew.% aufweisen und das kationische Polymerisat A mit einem Molekulargewicht von größer 1,5 Mio g/mol in Mengen von 30 bis 70 Gew.% bezogen auf den Polymeranteil aus Polymer A und polymerem Dispergiermittel B enthalten.

Mit dem erfinderischen Verfahren ist es möglich, Wasser-in-Wasser-Polymerdispersionen mit einem kationischen Anteil von 55 bis 100 Gew.% im hochmolekuren Polymeranteil unter Vermeidung von rheologischen Problemen sicher herzustellen und den Polymerdispersionen äußerst stabile Eigenschaften bezüglich der Lagerung zu verleihen und vorteilhafte Lösungsviskositäten und Anwendungseigenschaften zu erzielen.

Zur Durchführung des erfindungsgemäßen Verfahrens wird die kontinuierliche wässrige Phase mit dem polymeren Dispergiermittels B, und gegebenenfalls weiteren Zusatzstoffen wie etwa Salzen, Säuren oder polyfunktionellen Alkoholen durch Verteilen der Monomeren bzw. deren wässrige Lösung nach bekannten Verteilungsmethoden, vorzugsweise durch Rühren, hergestellt.

Die wässrige Phase, in der die Monomeren, vorzugsweise als wässrige Lösung, verteilt werden, muss genügend wasserlösliches polymeres Dispergiermittel B enthalten, damit das während der Polymerisation sich bildende Polymerisat A verteilt bleibt, ein unkontrolliertes Wachsen der Polymerteilchen und/oder ein Agglomerieren der sich bildenden Polymerteilchen verhindert wird. Vorzugsweise wird das polymere Dispergiermittel B in Form einer 20 Gew.% bis 80 Gew. %igen wässrigen Lösung, besonders bevorzugt 30 Gew.% bis 50 Gew.% eingesetzt

Die Monomeren werden, bezogen auf die Gesamtlösung bzw. auf die resultierende Gesamtdispersion, in einer Menge von 5 bis 60 Gew.-%, vorzugsweise 10 bis 50 Gew.% in der wässrigen Phase, die mindestens ein Dispergiermittel B enthält, verteilt. Aus den Monomeren wird durch Polymerisation das hochmolekulare Polymerisat A gebildet.

Bei Mitverwendung weiterer wasserlöslicher Dispersionsmittelkomponenten mit dem polymeren Dispergiermittel B werden die verschiedenen Dispergiermittel entweder gemeinsam in der wässrigen Phase aufgelöst, oder in einer bevorzugten Ausführungsform getrennt vorgelöst und danach zu einer einzigen Lösung vereint. Das Gewichtsverhältnis des polymeren Dispergiermittels B zu diesen weiteren Komponenten beträgt 1:0,01 bis 0,5, vorzugsweise 1:

0,01 bis 0,3.

Die Monomeren des zu bildenden Polymerisats A können als solche direkt in die kontinuierliche wässrige Phase, in der sich das polymere Dispergiermittel befindet, eingebracht werden oder vorzugsweise als wässrige Monomerlösung. Ebenso können die Monomeren oder die Monomerlösung vollständig oder teilweise am Beginn der Polymerisation im Dispergiermittel B verteilt werden, wobei der Rest der Monomeren oder der Monomerenlösung in dosierten Teilmengen oder als kontinuierlicher Zulauf unter Verteilung über den gesamten Polymerisationsverlauf zugegeben wird.

Zum Starten der Polymerisation werden beispielsweise radikalische Initiatoren, sogenannte Polymerisationsinitiatoren verwendet. Bevorzugt werden als radikalische Initiatoren Azoverbindungen, wie z. B. 2,2-Azobiisobutyronitril, 2,2-Azobis(2-aminopropan)dihydrochlorid oder vorzugsweise Kaliumpersulfat, Ammoniumpersulfat, Wasserstoffperoxid, ggf. in Kombination mit einem Reduktionsmittel, wie z. B. einem Amin oder Natriumsulfit, eingesetzt. Die Initiatormenge, bezogen auf die zu polymerisierenden Monomeren, liegt im allgemeinen bei $10^{-3}$ bis 1 Gew.%, vorzugsweise $10^{-2}$ bis 0,1 Gew.%. Die Initiatoren können zu Beginn der Polymerisation vollständig oder auch nur teilweise mit einer anschließenden Dosierung der Restmenge über den gesamten Polymerisationsverlauf zugegeben werden. In einer bevorzugten Ausführungsform wird die Polymerisation durch ein Redoxinitiatorsystem gestartet und nach Erreichen des Temperaturmaximums zur Absenkung des Restmonomergehaltes mit einem Azoinitiator fortgeführt.

In einer weiteren vorteilhaften Ausführungsform wird nach Abschluss der exothermen Polymerisationsreaktion, d.h. nach dem Temperaturmaximum mit einer nachgeschalteten Redox-Initiatorzugabe der Restmonomergehalt weiter abgesenkt.

In einer weiteren vorteilhaften Ausführungsform der Erfindung werden während der Polymerisation sowohl die Monomerlösung als auch die Dispergiermittellösung in den Polymerisationsreaktor dosiert. Für gewöhnlich wird ein Teil, beispielsweise 10 bis 20% der Monomerlösung und der Dispergiermittellösung vorgelegt. Nach der Initiierung der Polymerisation erfolgt die zuvor erwähnte Dosierung, die gegebenenfalls mit einer weiteren Dosierung des Polymerisationsinitiators einhergeht.

Darüber hinaus ist es auch möglich, die Herstellung der Wasser-in-Wasser Dispersionen gemäß Verfahren der EP-A-0 664 302 durchzuführen, deren entsprechende Offenbarung hiermit als Referenz eingeführt wird. Im wesentlichen wird bei dieser Verfahrensweise Wasser während der Polymerisation abgezogen und ggf. polymeres Dispergiermittel B zugegeben.

Die Polymerisationstemperatur beträgt im allgemeinen 0 bis 120°C, bevorzugt 30 bis 90°C. Vorzugsweise wird die Polymerisation so durchgeführt, dass das System mit Inertgas gespült und unter einer Inertgasatmosphäre, z. B. unter Stickstoffatmosphäre, polymerisiert wird. Der Polymerisationsumsatz bzw. das Ende der Polymerisation kann in einfacher Art und Weise durch Bestimmung des Restmonomergehaltes festgestellt werden. Die Methoden hierfür sind dem Fachmann bekannt.

Nach der Polymerisation kann es vorteilhaft sein, das Reaktionsgemisch abzukühlen, bevor gegebenenfalls weitere Zusatzstoffe wie beispielsweise Salze oder Säuren, vorzugsweise unter Rühren der Dispersion, zugegeben werden.

Sofern eine Zugabe von Säure vorgesehen ist, wird diese in Mengen von 0,1 bis 3 Gew.%, bezogen auf die Gesamtdispersion, zugesetzt. Der Zusatz kann sowohl vor, während als auch nach der Polymerisation erfolgen. Bevorzugt ist die Zugabe nach der Polymerisation. In einer vorteilhaften Ausführungsform weisen die Polymerisate nach der Zugabe der Säurekomponente einen pH-Wert nach Verdünnung auf eine 5%ige Lösung von 3 bis 4 auf.

Sofern ein Salz bei der Herstellung der Wasser-in-Wasser-Polymerdispersion zum Einsatz kommt, wird dieses Salz vorzugsweise in Mengen von 0,1 bis 3,0 Gew.%, bezogen auf die Gesamtdispersion, zugesetzt. Das Salz kann sowohl vor, während oder nach der Polymerisation zugegeben werden. Die Zugabe vor der Polymerisation ist bevorzugt. Dabei sollen die Mengen an zugesetzter wasserlöslicher Säure und dem gegebenenfalls zugesetzten wasserlöslichen Salz vorzugsweise maximal 5 Gew.%, vorzugsweise 4 Gew.%, bezogen auf die Gesamtdispersion, betragen.

Sofern das polymere Dispergiermittel B zusammen mit einem wasserlöslichen polyfunktionellen Alkohol und/oder dessen Umsetzungsprodukt mit Fettaminen eingesetzt wird, erfolgt dessen Zugabe in die wässrige Lösung des polymeren Dispergiermittels B vor der Polymerisation.

Die nach dem erfindungsgemäßen Verfahren hergestellten Polymerisate A sind hochmolekulare, aber dennoch wasserlösliche bzw. wasserquellbare Polymerisate. Das Molekulargewichtsmittel $M_w$ der in der Polymerdispersion vorliegenden Polymermischung aus Polymerisat A und polymeren Dispergiermittel B liegt, gemessen nach der GPC-Methode, in einem Bereich von größer 1,5 x $10^6$ g/mol.

Die erfindungsgemäß erhältlichen Wasser-in-Wasser Polymerdispersionen haben den unerwarteten Vorteil, daß sie nicht nur nach ihrer Herstellung, d. h. ohne nennenswerte Lagerung, ggf. nach Verdünnung mit Wasser, ausgezeichnete Flockungsmittel bei der Sedimentation von Feststoffen, vorzugsweise bei der Wasser- und Prozesswasser-Aufbereitung oder Abwasserreinigung oder bei der Rohstoffgewinnung, vorzugsweise von Kohle, Aluminium oder Erdöl, Hilfsmittel bei der Papierherstellung oder Demulgatoren bei Trennung von Öl- und/oder Fett-haltigen Wassergemischen, ausgezeichnete Verdickungsmittel, Retentions- und Entwässerungsmittel bei der Papierherstellung und/oder Zusatzmittel für Pflanzenschutzmittel ggf. zusammen mit anderen biologisch wirksamen Stoffen oder Erosionsschutzmittel

sind. Die erfindungsgemäß erhältlichen Wasser-in-Wasser Dispersionen zeigen diese hervorragende Wirksamkeit auch bei längerer Lagerung unter Extrembedingungen, wie z. B. erhöhte Temperatur, d. h. Temperaturen über 25°C bis maximal 50°C, praktisch unverändert. Dieser Qualitätserhalt der erfindungsgemäß erhältlichen Dispersionen ist eine bisher unerfüllte Forderung der anwendenden Industrie und u. a. unverzichtbar, sofern diese Dispersionen in Regionen mit extremen klimatischen Bedingungen verbracht und eingesetzt werden sollen.

**Bestimmungsmethoden**

Lösungsviskosität:

Zur Bestimmung der Lösungsviskosität der erfindungsgemäß hergestellten Wasser-in-Wasser Dispersionen wird eine 5%ige Lösung hergestellt. Für die Messung werden 340 g der 5%igen Lösung benötigt. Hierzu wird die notwendige Menge an vollentsalztem Wasser in einem 400 ml Becherglas vorgelegt. Anschließend wird das vorgelegte Wasser mit einem Fingerrührer so intensiv gerührt, daß sich ein Kegel bildet, der bis zum Boden des Becherglases reicht. Die für die Herstellung der 5%igen Lösung notwendige Menge an Wasser-in-Wasser Dispersion wird mittels einer Einmalspritze in das vorgelegte, gerührte Wasser als Einmaldosis eingespritzt. Die Lösung wird anschließend bei 300 Upm (± 10 Upm) eine Stunde lang gerührt. Nach einer Standzeit von 10 Minuten wird die Brookfield Viskosität mit Hilfe eines Brookfield-Viskosimeter RVT-DV II mit einer Spindel 2 bei Geschwindigkeit 10 bestimmt.

Salzviskosität:

In einem 400 ml Becherglas werden 289 g vollentsalztes Wasser eingewogen. Anschließend wird das vorgelegte Wasser mit einem Fingerrührer so intensiv gerührt, daß sich ein Kegel bildet, der bis zum Boden des Becherglases reicht. 17 g der erfindungsgemäß hergestellten Wasser-in-Wasser Dispersion werden mittels einer Einmalspritze als Einmaldosis in das vorgelegte, gerührte Wasser eingespritzt. Nachdem sich die Wasser-in-Wasser Dispersion gelöst hat, werden 34 g Natriumchlorid (technisch) eingestreut. Nach 16 Minuten Rühren mit 300 Upm (± 10 Upm) wird die Lösung für weitere 10 Minuten stehen gelassen. Anschließend wird die Brookfield Viskosität mit Hilfe eines Brookfield-Viskosimeter RVT-DV II mit Spindel 1 bei Geschwindigkeit 10 bestimmt.

**Beispiele**

Alle in den Beispielen verwendeten polymeren Dispergiermittel werden in Form einer 40 Gew.% Lösung eingesetzt.

**Beispiele B1, B2 und Vergleichsbeispiele V1 bis V3** (alle 70 Gew.% kat. Monomeranteil im Polymer A)

Zu einer Lösung aus 108g Acrylamid (50%ig), 234g Wasser, 9,8g Ammoniumsulfat, 2g Versenex 80 (5%ig), 158g Trimethylammoniumethylacrylatchlorid (80%ig) werden 450g Dispergiermittel (Poly-Trimethylammoniumpropylacrylamidchlorid) zugegeben. Die Mischung wird in einen 2 Liter Kolben mit KPG Rührer gegeben und auf 35°C Starttemperatur geheizt. Nach der Sauerstoffbefreiung durch Durchblasen von Stickstoff werden 50 ppm Natriumdisulfit, 50 ppm Natriumperoxodisulfat und 5 ppm tert. Butylhydroperoxyd zugegeben. Nach Erreichen des Temperaturmaximums gibt man erneut Initiator (400 ppm ABAH) hinzu und lässt bei dieser Temperatur 15 min nachreagieren. Nun werden noch 5g Zitronensäure eingetragen. Das fertige Produkt wird abgekühlt und abgefüllt.
Die wirksame Substanz beträgt 37%.

Vergleichsbeispiel V3 ist in Anlehnung an Beispiel B1 hergestellt, wobei jedoch ein polymeres Dispergiermittel aus polymerem kationisiertem Dimethlyaminoethylacrylat (Polyadame-Quat.) verwendet wurde.

In der folgenden Tabelle 1 sind die Versuchsergebnisse für Dispergiermittel mit unterschiedlichen Molekulargewichtsmitteln (MW) dargestellt

Tabelle 1

| Bsp | MW Disperg. [g/mol] | max Drehm. bei der Polym, [N cm] | Drehm. n. Kühlung [N cm] | Visk. Produkt [mPas] | Visk. 5% Lösung [mPas] | Visk. Salzlsg. [mPas] |
|---|---|---|---|---|---|---|
| V1 | 235.000 | 53 | 29,5 | verfestigt | | |
| V2 | 280.000 | 37 | 27 | verfestigt | | |
| B1 | 530.000 | 16,4 | 35 | 17.400 | 1.260 | 168 |

(fortgesetzt)

| Bsp | MW Disperg. [g/mol] | max Drehm. bei der Polym, [N cm] | Drehm. n. Kühlung [N cm] | Visk. Produkt [mPas] | Visk. 5% Lösung [mPas] | Visk. Salzlsg. [mPas] |
|---|---|---|---|---|---|---|
| B2 | 580.000 | 19,2 | 40 | 19.000 | 1.060 | 140 |
| V3 | 500.000 | > 50 | verfestigt | | | |

Der Restmonomergehalt von B1 beträgt 380 ppm Acrylamid.

**Anwendungstechnische Beispiele**

Bestimmung der Entwässerungsgeschwindigkeit einer Papierstoffsuspension

Mit dem Gerät DFS 03 der Fa. BTG Mütek wird die Entwässerungsgeschwindigkeit in Abhängigkeit von der Zeit durch Zugabe der erfindungsgemäßen Polymer-Dispersionen zu definierten Papierstoffsuspensionen bestimmt.

Dazu werden die erfindungsgemäßen Polymer-Dispersionen mit vollentsalztem Wasser auf eine Konzentration von 0,1 % eingestellt. 300g einer 1 % Standard-Altpapierstoff-Suspension (15% Asche, 57°SR* ) werden mit Leitungswasser auf 1000ml im Schopper-Riegler-Mahlgradbecher verdünnt. Die Entwässerungsversuche werden mit 3 verschiedenen Konzentrationen der erfindungsgemäßen Polymer-Dispersion durchgeführt (400/800/1200g/L). Insgesamt wird das Stoff-Wasser-Gemisch 25 s bei 600 $min^{-1}$ gehalten, nach den ersten 10s wird die verdünnte erfindungsgemäße Dispersion dosiert. Entwässert wird innerhalb von 60 s aber maximal 500 g. Aus der folgenden Tabelle sind die Entwässerungszeiten für 500g für verschiedene Polymerdispersionen und Einsatzkonzentrationen abzulesen.

*: Der jeweilige Stoffzustand bei der Mahlung wird durch den Mahlgrad in °SR (Schopper-Riegler-Grade) ausgedrückt.

Tabelle 2

| Polymer-Beispiel | Konzentration [g/l] | Entwässerungszeit [sec] |
|---|---|---|
| B1 | 400/800/1200 | 24/17/16,5 |

**Bestimmung der Retention und Ascheretention**

Mit dem Gerät DFS 03 der Fa. BTG Mütek wird die Retention durch Zugabe von erfindungsgemäßen Polymer-Dispersionen zu definierten Papierstoffsuspensionen bestimmt.

Dazu werden die erfindungsgemäßen Polymer- Dispersionen mit vollentsalztem Wasser auf 0,1 Gew. % Konzentration eingestellt. 500g einer 1 % Standard-Altpapierstoff-Suspension werden mit Leitungswasser auf 1000 ml im Schopper-Riegler-Mahlgradbecher verdünnt. Die Retentionsversuche werden mit 3 verschiedenen Konzentrationen der erfindungsgemäßen Polymer- Dispersion durchgeführt (400/800/1200g/L). Insgesamt wird das Stoff-Wasser-Gemisch 25 s bei 600 $min^{-1}$ gehalten, nach den ersten 10 s wird die verdünnte Polymer-Dispersion dosiert und nach weiteren 15s wird das Retentionsfiltrat entnommen, über einen Schwarzbandfilter gegeben und 1 h bei 105°C bis zur Massenkonstanz getrocknet. Zur Bestimmung der Ascheretention wird bei 550°C 2h verascht und dann atro zurückgewogen.

$$\text{Retention \%} = \frac{\text{SD Zulauf- SD Auslauf}}{\text{SD Zulauf}} \times 100$$

$$\text{Asche Retention \%} = \left(1- \frac{\text{SD Auslauf} \times \text{Asche Auslauf \%}}{\text{SD Zulauf} \times \text{Asche Zulauf \%}}\right) \times 100$$

SD Zulauf: Stoffdichte Zulauf (Stoffsuspension) in Gew.%
SD Auslauf: Stoffdichte Filtrat (Siebwasser) in Gew.%
Asche Auslauf: Prozentualer mineralischer Verbrennungsrückstand in Gew.% des Filtrates (Siebwasser)

Asche Zulauf: Prozentualer mineralischer Verbrennungsrückstand in Gew.% des Zulaufes (Stoffsuspension)

Tabelle 3

| **400 g/l** | | |
|---|---|---|
| Polymer-Bsp. | **Retention** % | **Ascheretention** % |
| B1 | 88,13 | 75,84 |

Tabelle 4

| **800 g/l** | | |
|---|---|---|
| Polymer-Bsp. | **Retention** % | **Ascheretention** % |
| B1 | 90,24 | 80,28 |

Tabelle 5

| **1200 g/l** | | |
|---|---|---|
| Polymer-Bsp. | **Retention** % | **Ascheretention** % |
| B1 | 91,21 | 85,13 |

**Bestimmung der Entwässerungszeit einer Papierstoffsuspension bei gleichzeitiger Beurteilung von Formation (Permeabilität) und Trübung**

Mit dem Gerät Dynamic Drainage Analyser (DDA) der Firma AB Akribi Kemikonsulter wird die Entwässerungszeit bei Zugabe der erfindungsgemäßen Polymer-Dispersionen zu definieren Papierstoffsuspensionen mit Vakuum ermittelt. Es erfolgt die Messung der Trübung sowie der Permeabilität, welche Rückschlüsse auf die Formation der entwässerten Papierstoffsuspension zulässt.

Dazu werden 500ml einer 1 %igen Papierstoffsuspension in dem Rührbehälter vorgelegt, das erfindungsgemäße Produkt laut Beispiel 2 zugegeben, 10 Sekunden bei 600 U/min gerührt und anschließend bei einem Vakuum von 500mbar über ein Sieb entwässert. Das Gerät zeigt die Entwässerungszeit in Sekunden und die Permeabilität in Millibar an. Das Filtrat wird aufgefangen und separat die Trübung ermittelt.

Beim Dualsystem wird 6kg/t Polymin® SK zugegeben und 15 Sekunden bei 1200U/min geschert. Anschließend erfolgt die Zugabe von 0,6kg/t Organopol®, welches 10 Sekunden bei 600U/min gerührt wird. Der weitere Versuchsablauf erfolgt wie oben beschrieben.

Die eingesetzten Polymere werden mit vollentsalztem Wasser auf eine Konzentration von 0,1 Gew. % eingestellt.

Tabelle 6

| Produkt | Dosierung (kg/t) | Entwässerung (sec) | Permeabilität (mBar) | Trübung (NTU) |
|---|---|---|---|---|
| Polymin® SK<br>Organopol® 5670 | 6<br>0,6 | 6,3 | 177,6 | 180 |
| B2 | 2,5 | 5,3 | 177,0 | 180 |

Polymin SK ist ein mod. kationisches Polyethylenimin der Fa. BASF Organopol 5670 ist ein Polyacrylamid der Fa. CIBA

Die Vorteile der erfindungsgemäßen Polymerdispersionen werden an dem Beispiel deutlich. Einerseits lässt sich die zweimalige Polymerzugabe des dualen Flockungssystems vermeiden und darüber hinaus werden bei geringerer Einsatzmenge bessere Eigenschaften erzielt.

## Patentansprüche

**1.** Kationische Wasser-in-Wasser Polymerdispersion enthaltend ein kationisches Polymerisat A und wenigstens ein

polymeres kationisches Dispergiermittel B, **dadurch gekennzeichnet,**

- **dass** das Polymerisat A aus
a1) 55 bis 100 Gew.% kationischen Monomeren des Typs der kationisierten Dialkylaminoalkyl(meth)acrylate und/oder Dialkylaminoalkyl(meth)acrylamide und
a2) 0 bis 45 Gew.% nichtionischen Monomeren gebildet ist;
und ein Molekulargewicht von größer 1,5 Mio g/mol aufweist; und
- **dass** das polymere kationische Dispergiermittel B aus
b1) 30 bis 100 Gew.% kationisierten Dialkylaminoalkyl(meth)acrylamiden und/oder kationisierten N-Alkyl bzw. N,N-Dialkyl(meth)acrylamiden und
b2) 0 bis 70 Gew.% nichtionischen Monomeren gebildet ist;
und ein Molekulargewichtsmittel Mw von über 350.000 bis 1 Mio g/mol aufweist;

wobei die kationische Wasser-in-Wasser Polymerdispersion einen Wasseranteil von 40 bis 90 Gew.% aufweist und das kationische Polymerisat A in Mengen von 30 bis 70 Gew.% bezogen auf den Polymeranteil aus Polymer A und polymerem Dispergiermittel B enthält.

2. Wasser-in-Wasser Polymerdispersion gemäß Anspruch 1, **dadurch gekennzeichnet, dass** das polymere Dispergiermittel B bis zu 30 Gew.% amphiphile Monomere einpolymerisiert enthält.

3. Wasser-in-Wasser Polymerdispersion gemäß Anspruch 1 und 2, **dadurch gekennzeichnet, dass** das kationische Polymerisat A bis zu 30 Gew.% amphiphile Monomere einpolymerisiert enthält.

4. Wasser-in-Wasser Polymerdispersion gemäß Anspruch 1 bis 3, **dadurch gekennzeichnet, dass** die kationisierten Monomere a1 und b1) jeweils 1 bis 6 C-Atome in den Alkyl- bzw. Alkylengruppen enthalten.

5. Wasser-in-Wasser Polymerdispersion gemäß Anspruch 1 bis 4, **dadurch gekennzeichnet, dass** als Monomer a1) kationisiertes Dimethylaminoethylacrylat und/oder Dimethylaminopropylacrylamid ausgewählt ist.

6. Wasser-in-Wasser Polymerdispersion gemäß Anspruch 1 bis 5, **dadurch gekennzeichnet, dass** als Monomer b1) kationisiertes Dimethylaminopropylacrylamid ausgewählt ist.

7. Wasser-in-Wasser Polymerdispersion gemäß Anspruch 1 bis 6, **dadurch gekennzeichnet, dass** die nichtionischen Monomere a2) und b2) Verbindungen

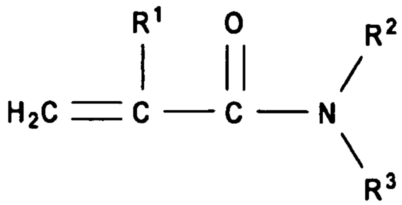

(I)

gemäß der allgemeinen Formel (I) sind,
in der

$R^1$ für einen Wasserstoff oder einen Methylrest, und
$R^2$ und $R^3$, unabhängig voneinander, für Wasserstoff, für einen Alkyl oder Hydroxyalkyl-Rest mit 1 bis 5 C-Atomen

stehen.

8. Wasser-in-Wasser Polymerdispersion gemäß Anspruch 1 bis 7, **dadurch gekennzeichnet, dass** als nichtionisches Monomer a2) und b2) Acrylamid ausgewählt ist.

9. Wasser-in-Wasser Polymerdispersion gemäß Anspruch 1 bis 8, **dadurch gekennzeichnet, dass** sie wasserlösliche Salze und/oder wasserlösliche Säure in einer Menge von jeweils 0,1 bis 3 Gew.% bezogen auf die Gesamtdispersion aufweist und dass bei Anwesenheit von Säure und Salz insgesamt nicht mehr als 5 Gew.% vorhanden sind.

**10.** Wasser-in-Wasser Polymerdispersion gemäß Anspruch 1 bis 9, **dadurch gekennzeichnet, dass** sie bis zu 30 Gew. % wasserlösliche polyfunktionelle Alkohole und/oder deren Umsetzungsprodukte mit Fettaminen aufweist.

**11.** Wasser-in-Wasser Polymerdispersion gemäß Anspruch 1 bis 10, **dadurch gekennzeichnet, dass** sie nach Verdünnung auf eine 5 Gew.%ige wässrige Lösung einen pH-Wert von 3 bis 4 aufweist.

**12.** Wasser-in-Wasser Polymerdispersion gemäß Anspruch 1 bis 11, **dadurch gekennzeichnet, dass** sie nach Verdünnung auf eine 5 Gew.% ige wässrige Lösung eine Viskosität von mindestens 1000 mPas aufweist.

**13.** Verfahren zur Herstellung von Wasser-in-Wasser-Polymerdispersionen gemäß Anspruch 1 bis 12 aus einem kationischen Polymerisat A und wenigstens einem polymeren kationischen Dispergiermittel B, **dadurch gekennzeichnet, dass** in einem Polymerisationsreaktor

- eine wässrige Lösung eines polymeren kationischen Dispergiermittels B mit einem Molekulargewichtsmittel Mw von über 350.000 bis 1 Mio g/mol und aufgebaut aus
b1) 30 bis 100 Gew.% kationisierten Dialkylaminoalkyl(meth)acrylamiden und/oder kationisierten N-Alkylbzw. N,N-Dialkyl(meth)acrylamiden und
b2) 0 bis 70 Gew.% nichtionischen Monomeren mit
- einer Monomermischung aus
a1) 55 bis 100 Gew.% kationisierter Mono- und/oder Dialkylaminoalkyl(meth)acrylate und/oder Dialkylaminoalkyl (meth)acrytamide und
a2) 0 bis 45 Gew.% nichtionischer Monomere vereinigt wird und
- unter Zugabe von radikalischen Initiatoren eine radikalische Polymerisation der Monomerenmischung durchgeführt wird;

wobei die kationischen Wasser-in-Wasser Polymerdispersionen einen Wasseranteil von 40 bis 90 Gew.% aufweisen und das kationische Polymerisat A mit einem Molekulargewicht von größer 1,5 Mio g/mol in Mengen von 30 bis 70 Gew.% bezogen auf den Polymeranteil aus Polymer A und polymerem Dispergiermittel B enthalten.

**14.** Verfahren nach Anspruch 13, **dadurch gekennzeichnet, dass** das polymere Dispergiermittel B in Form einer 20 bis 80 Gew.%igen wässrigen Lösung eingesetzt wird.

**15.** Verfahren nach Anspruch 13 und 14, **dadurch gekennzeichnet, dass** die zu polymerisierenden Monomere in der Gesamtmischung aus Monomeren und wässriger Dispergiermittellösung zu 5 bis 60 Gew.% enthalten sind.

**16.** Verfahren nach Anspruch 13 bis 15, **dadurch gekennzeichnet, dass** die zu polymerisierenden Monomere nur zu einem Teil vorgelegt werden und der Rest im Laufe der radikalischen Polymerisationsreaktion in dosierten Teilmengen oder als kontinuierlicher Zulauf zugegeben wird.

**17.** Verfahren nach Anspruch 13 bis 15, **dadurch gekennzeichnet, dass** die zu polymerisierenden Monomere und die wässrige Dispergiermittellösung nur zu einem Teil vorgelegt werden und der Rest im Laufe der radikalischen Polymerisationsreaktion in dosierten Teilmengen oder als kontinuierlicher Zulauf zugegeben wird.

**18.** Verfahren nach Anspruch 13 bis 17, **dadurch gekennzeichnet, dass** die radikalische Polymerisation unter Einsatz von Redox- und/oder Azoinitiatoren bei Temperaturen zwischen 0 und 120°C erfolgt.

**19.** Verfahren nach Anspruch 13 bis 18, **dadurch gekennzeichnet, dass** für die radikalische Polymerisation das Initiatorsystem kontinuierlich während des gesamten Polymerisationsverlaufs zugegeben wird.

**20.** Verfahren nach Anspruch 13 bis 19, **dadurch gekennzeichnet, dass** eine Zugabe von Säure vor, während oder nach der radikalischen Polymerisation erfolgt.

**21.** Verwendung der Wasser-in-Wasser-Polymerdispersion nach Anspruch 1 bis 12 als Flockungsmittel bei der Sedimentation von Feststoffen, vorzugsweise bei der Wasser- und Prozesswasser-Aufbereitung oder Abwasserreinigung, bei der Rohstoffgewinnung, vorzugsweise von Kohle, Aluminium oder Erdöl, oder als Demulgator bei Trennung von Öl- und/oder Fett-haltigen Wassergemischen.

**22.** Verwendung der Wasser-in-Wasser-Polymerdispersion nach Anspruch 1 bis 12 als Retentions- und Entwässerungsmittel bei der Papierherstellung.

**23.** Verwendung der Wasser-in-Wasser-Polymerdispersion nach Anspruch 1 bis 12 als Verdickungsmittel.

**24.** Verwendung der Wasser-in-Wasser-Polymerdispersion nach Anspruch 1 bis 12 als Zusatz zu einem Pflanzenschutzmittel ggf. zusammen mit anderen biologisch wirksamen Stoffen

**25.** Verwendung der Wasser-in-Wasser-Polymerdispersion nach Anspruch 1 bis 12 als Zusatz zu einem Erosionsschutzmittel.

## Claims

**1.** A cationic water-in-water polymer dispersion containing a cationic polymer A and at least one polymeric cationic dispersant B,
**characterised**

- **in that** said polymer A is formed from
a1) 55 to 100 wt.% of cationic monomers of the type of cationised dialkylaminoalkyl (meth)acrylates and/or dialkylaminoalkyl(meth)acrylamides, and
a2) 0 to 45 wt.% of nonionic monomers;
and has a molecular weight of greater than 1.5 million g/mol; and
- **in that** said polymeric cationic dispersant B is formed from
b1) 30 to 100 wt.% of cationised dialkylaminoalkyl(meth)acrylamides and/or cationised N-alkyl- or N,N-dialkyl (meth)acrylamides, and
b2) 0 to 70 wt.% of nonionic monomers; and has an average molecular weight $M_w$ of greater than 350,000 to 1 million g/mol;

wherein the cationic water-in-water polymer dispersion has a proportion of water of 40 to 90 wt.% and contains the cationic polymer A in amounts of 30 to 70 wt.%, relative to the polymer fraction comprising polymer A and polymeric dispersant B.

**2.** A water-in-water polymer dispersion according to claim 1, **characterised in that** the polymeric dispersant B contains up to 30 wt.% of amphiphilic monomers incorporated therein by polymerisation.

**3.** A water-in-water polymer dispersion according to claims 1 and 2, **characterised in that** the cationic polymer A contains up to 30 wt.% of amphiphilic monomers incorporated therein by polymerisation.

**4.** A water-in-water polymer dispersion according to claims 1 to 3, **characterised in that** each of the cationised monomers a1) and b1) contains 1 to 6 C atoms in the alkyl or alkylene groups.

**5.** A water-in-water polymer dispersion according to claims 1 to 4, **characterised in that** cationised dimethylaminoethyl acrylate and/or dimethylaminopropylacrylamide is selected as monomer a1).

**6.** A water-in-water polymer dispersion according to claims 1 to 5, **characterised in that** cationised dimethylaminopropylacrylamide is selected as monomer b1).

**7.** A water-in-water polymer dispersion according to claims 1 to 6, **characterised in that** the nonionic monomers a2) and b2) are compounds of general formula (I)

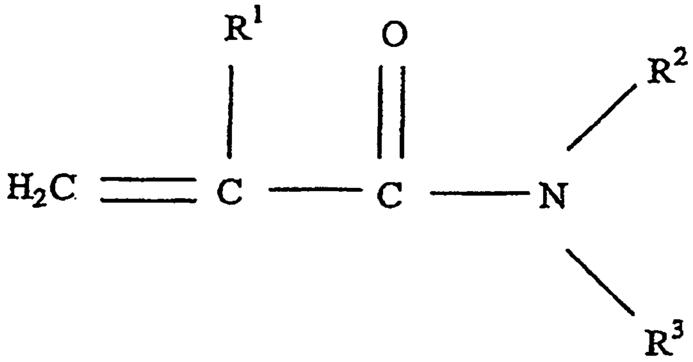

(I)

in which

$R^1$ denotes a hydrogen or a methyl residue, and
$R^2$ and $R^3$ mutually independently denote hydrogen, an alkyl or hydroxyalkyl residue with 1 to 5 C atoms.

**8.** A water-in-water polymer dispersion according to claims 1 to 7, **characterised in that** acrylamide is selected as nonionic monomer a2) and b2).

**9.** A water-in-water polymer dispersion according to claims 1 to 8, **characterised in that** the dispersion comprises water-soluble salts and/or water-soluble acid each in an amount of 0.1 to 3 wt.%, relative to the overall dispersion, and **in that** if acid and salt are present, no more than a total of 5 wt.% are present.

**10.** A water-in-water polymer dispersion according to claims 1 to 9, **characterised in that** the dispersion contains up to 30 wt.% of water-soluble polyfunctional alcohols and/or reaction products thereof with fatty amines.

**11.** A water-in-water polymer dispersion according to claims 1 to 10, **characterised in that** the dispersion has a pH value of 3 to 4 following dilution to form a 5% aqueous solution.

**12.** A water-in-water polymer dispersion according to claims 1 to 11, **characterised in that** the dispersion has a viscosity of at least 1000 mPa·s following dilution to form a 5% aqueous solution.

**13.** A method for the production of water-in-water polymer dispersions according to claims 1 to 12 from a cationic polymer A and at least one polymeric cationic dispersant B, **characterised in that**, in a polymerisation reactor,

- an aqueous solution of a polymeric cationic dispersant B with an average molecular weight $M_w$ of greater than 350,000 to 1 million g/mol, synthesised from
b1) 30 to 100 wt.% of cationised dialkylaminoalkyl(meth)acrylamides and/or cationised N-alkyl- or N,N-dialkyl (meth)acrylamides, and
b2) 0 to 70 wt.% of nonionic monomers, and
- a monomer mixture of
a1) 55 to 100 wt.% of cationised mono- and/or dialkylaminoalkyl (meth)acrylates and/or dialkylaminoalkyl(meth) acrylamides, and
a2) 0 to 45 wt.% of nonionic monomers, are combined and,
- with addition of free-radical initiators, free-radical polymerisation of the monomer mixture is performed;

wherein the cationic water-in-water polymer dispersions have a proportion of water of 40 to 90 wt.% and contain the cationic polymer A with a molecular weight of greater than 1.5 million g/mol in amounts of 30 to 70 wt.%, relative to the polymer fraction comprising polymer A and polymeric dispersant B.

**14.** A method according to claim 13, **characterised in that** the polymeric dispersant B is used in the form of a 20 to 80 wt.% aqueous solution.

**15.** A method according to claims 13 and 14, **characterised in that** the monomers to be polymerised are present in

an amount of 5 to 60 wt.% in the overall mixture of monomers and aqueous dispersant solution.

**16.** A method according to claims 13 to 15, **characterised in that** only a proportion of the monomers to be polymerised is initially introduced, the remainder being added in metered portions or as a continuous feed during the course of the free-radical polymerisation reaction.

**17.** A method according to claims 13 to 15, **characterised in that** only a proportion of the monomers to be polymerised and of the aqueous dispersant solution are initially introduced, the remainder being added in metered portions or as a continuous feed during the course of the free-radical polymerisation reaction.

**18.** A method according to claims 13 to 17, **characterised in that** the free-radical polymerisation is performed using redox and/or azo initiators at temperatures of between 0 and 120°C.

**19.** A method according to claims 13 to 18, **characterised in that** the initiator system for free-radical polymerisation is added continuously during the entire course of the polymerisation.

**20.** A method according to claims 13 to 19, **characterised in that** acid is added before, during or after the free-radical polymerisation.

**21.** Use of the water-in-water polymer dispersion according to claims 1 to 12 as a flocculant in the sedimentation of solids, preferably in water and process water treatment or in waste water purification, in the recovery of raw materials, preferably coal, aluminium or petroleum, or as demulsifier in the separation of aqueous mixtures containing oil and/or fat.

**22.** Use of the water-in-water polymer dispersion according to claims 1 to 12 as a retention and dewatering agent in paper making.

**23.** Use of the water-in-water polymer dispersion according to claims 1 to 12 as a thickener.

**24.** Use of the water-in-water polymer dispersion according to claims 1 to 12 as an additive in a phytosanitary agent, optionally together with other biologically active substances.

**25.** Use of the water-in-water polymer dispersion according to claims 1 to 12 as an additive in an antierosion agent.

## Revendications

**1.** Dispersion cationique eau-dans-eau de polymère, contenant un polymère cationique A et au moins un dispersant cationique polymère B, **caractérisée**

- **en ce que** le polymère A est formé par
a1) 55 à 100% en poids de monomères cationiques du type des (méth)acrylates de dialkylaminoalkyle et/ou des dialkylaminoalkyl(méth)acrylamides cationisés et
a2) 0 à 45% en poids de monomères non ioniques ; et présente un poids moléculaire supérieur à 1,5 million g/mole ; et
- **en ce que** le dispersant cationique polymère B est formé par
b1) 30 à 100% en poids de dialkylaminoalkyl(méth)acrylamides cationisés et/ou de N-alkyl(méth)acrylamides ou, selon le cas, de N,N-dialkyl(méth)acrylamides cationisés et
b2) 0 à 70% en poids de monomères non ioniques ;
et présente un poids moléculaire moyen Mw de plus de 350 000 à 1 million g/mole ;

la dispersion cationique eau-dans-eau de polymère présentant une proportion d'eau de 40 à 90% en poids et contenant le polymère cationique A en des quantités de 30 à 70% en poids par rapport à la proportion polymère formée par le polymère A et le dispersant polymère B.

**2.** Dispersion eau-dans-eau de polymère selon la revendication 1, **caractérisée en ce que** le dispersant polymère B contient jusqu'à 30% en poids de monomères amphiphiles sous forme copolymérisée.

3. Dispersion eau-dans-eau de polymère selon les revendications 1 et 2, **caractérisée en ce que** le polymère cationique A contient jusqu'à 30% en poids de monomères amphiphiles sous forme copolymérisée.

4. Dispersion eau-dans-eau de polymère selon les revendications 1 à 3, **caractérisée en ce que** les monomères cationiques a1 et b1) contiennent à chaque fois 1 à 6 atomes de carbone dans les groupes alkyle ou, selon le cas, alkylène.

5. Dispersion eau-dans-eau de polymère selon les revendications 1 à 4, **caractérisée en ce qu'**on choisit comme monomère a1) de l'acrylate de diméthylaminoéthyle et/ou du diméthylaminopropylacrylamide cationisé.

6. Dispersion eau-dans-eau de polymère selon les revendications 1 à 5, **caractérisée en ce qu'**on choisit comme monomère b1) du diméthylaminopropylacrylamide cationisé.

7. Dispersion eau-dans-eau de polymère selon les revendications 1 à 6, **caractérisée en ce que** les monomères non ioniques a2) et b2) sont des composés

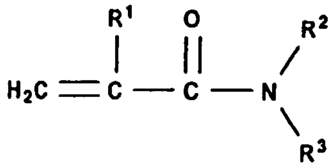 (I)

selon la formule générale (1), où

$R^1$ représente hydrogène ou un radical méthyle, et
$R^2$ et $R^3$ représentent, indépendamment l'un de l'autre, hydrogène, un radical alkyle ou hydroxyalkyle comprenant 1 à 5 atomes de carbone.

8. Dispersion eau-dans-eau de polymère selon les revendications 1 à 7, **caractérisée en ce qu'**on choisit, comme monomère non ionique a2) et b2), de l'acrylamide.

9. Dispersion eau-dans-eau de polymère selon les revendications 1 à 8, **caractérisée en ce qu'**elle présente des sels solubles dans l'eau et/ou des acides solubles dans l'eau en une quantité, à chaque fois, de 0,1 à 3% en poids par rapport à la dispersion totale et **en ce qu'**en cas de présence d'acide et de sel, elle ne présente au total pas plus de 5% en poids.

10. Dispersion eau-dans-eau de polymère selon les revendications 1 à 9, **caractérisée en ce qu'**elle présente jusqu'à 30% en poids d'alcools polyfonctionnels solubles dans l'eau et/ou leurs produits de transformation avec des amines grasses.

11. Dispersion eau-dans-eau de polymère selon les revendications 1 à 10, **caractérisée en ce qu'**elle présente, après dilution à une solution aqueuse de 5% en poids, un pH de 3 à 4.

12. Dispersion eau-dans-eau de polymère selon les revendications 1 à 11, **caractérisée en ce qu'**elle présente, après dilution à une solution aqueuse de 5% en poids, une viscosité d'au moins 1000 mPa.s.

13. Procédé pour la préparation de dispersions eau-dans-eau de polymère selon les revendications 1 à 12 à partir d'un polymère cationique A et d'au moins un dispersant cationique polymère B, **caractérisé en ce qu'**on rassemble, dans un réacteur de polymérisation,

- une solution aqueuse d'un dispersant cationique polymère B présentant un poids moléculaire moyen Mw de plus de 350 000 à 1 million g/mole et formé par
b1) 30 à 100% en poids de dialkylaminoalkyl(méth)acrylamides cationisés et/ou de N-alkyl(méth)acrylamides ou, selon le cas, de N,N-dialkyl(méth)acrylamides cationisés et
b2) 0 à 70% en poids de monomères non ioniques avec
- un mélange de monomères constitué par
a1) 55 à 100% en poids de (méth)acrylates de monoalkylaminoalkyle et/ou de dialkylaminoalkyle et/ou de

dialkylaminoalkyl(méth)acrylamides cationisés et
a2) 0 à 45% en poids de monomères non ioniques et
- on réalise, avec addition d'initiateurs radicalaires, une polymérisation radicalaire du mélange de monomères ;

les dispersions cationiques eau-dans-eau de polymère présentant une proportion d'eau de 40 à 90% en poids et contenant le polymère cationique A présentant un poids moléculaire supérieur à 1,5 million g/mole en des quantités de 30 à 70% en poids par rapport à la proportion polymère formée par le polymère A et le dispersant polymère B.

**14.** Procédé selon la revendication 13, **caractérisé en ce que** le dispersant polymère B est utilisé sous forme d'une solution aqueuse de 20 à 80% en poids.

**15.** Procédé selon les revendications 13 et 14, **caractérisé en ce que** les monomères à polymériser sont contenus dans le mélange total de monomères et de solution aqueuse de dispersant à raison de 5 à 60% en poids.

**16.** Procédé selon les revendications 13 à 15, **caractérisé en ce que** les monomères à polymériser ne sont disposés au préalable qu'en partie et le reste est ajouté au cours de la réaction de polymérisation radicalaire en des quantités partielles dosées ou sous forme d'alimentation continue.

**17.** Procédé selon les revendications 13 à 15, **caractérisé en ce que** les monomères à polymériser et la solution aqueuse de dispersant ne sont disposés au préalable qu'en partie et le reste est ajouté au cours de la réaction de polymérisation radicalaire en des quantités partielles dosées ou sous forme d'alimentation continue.

**18.** Procédé selon les revendications 13 à 17, **caractérisé en ce que** la polymérisation radicalaire a lieu avec utilisation d'initiateurs redox et/ou azo à des températures comprises entre 0 et 120°C.

**19.** Procédé selon les revendications 13 à 18, **caractérisé en ce que**, pour la polymérisation radicalaire, le système d'initiateur est ajouté en continu pendant tout le déroulement de la polymérisation.

**20.** Procédé selon les revendications 13 à 19, **caractérisé en ce qu'**une addition d'acide a lieu avant, pendant ou après la polymérisation radicalaire.

**21.** Utilisation de la dispersion eau-dans-eau de polymère selon les revendications 1 à 12 comme floculant lors de la sédimentation de solides, de préférence lors du traitement de l'eau et des eaux de procédé ou de l'épuration des eaux usées, lors de l'extraction de matières premières, de préférence de charbon, d'aluminium ou de pétrole, ou comme désémulsifiant lors de la séparation de mélanges d'eau contenant de l'huile et/ou de la graisse.

**22.** Utilisation de la dispersion eau-dans-eau de polymère selon les revendications 1 à 12 comme agent de rétention et de déshydratation lors de la production de papier.

**23.** Utilisation de la dispersion eau-dans-eau de polymère selon les revendications 1 à 12 comme épaississant.

**24.** Utilisation de la dispersion eau-dans-eau de polymère selon les revendications 1 à 12 comme additif d'un agent de phytoprotection, le cas échéant avec d'autres substances biologiquement actives.

**25.** Utilisation de la dispersion eau-dans-eau de polymère selon les revendications 1 à 12 comme additif d'un agent de protection contre l'érosion.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9814405 A
- WO 9831748 A
- WO 9831749 A
- EP 0630909 A
- US 6221957 B
- EP 0717056 A
- EP 0637598 A
- EP 262945 A2
- DE 10061483 A1
- EP 0664302 A